# EUROPEAN PATENT APPLICATION

(11) **EP 4 656 042 A1**
(43) Date of publication of application: **03.12.2025**
(21) Application number: 25178672.9
(22) Date of filing: 24.05.2025
(51) Int. Cl.: A01K 61/80

(54) **FEEDING DEVICE AND FEEDING SYSTEM**

(30) Priority: 31.05.2024 JP 2024088859; 07.02.2025 JP 2025019517
(71) Applicant: Yanmar Holdings Co., Ltd., Osaka-shi, Osaka (JP)
(72) Inventor: UEZUMIYA, Keisuke, Osaka (JP); YOSHIKAWA, Kota, Osaka (JP)
(74) Representative: Sekiguchi, Kazuya

(57) **Abstract**

[Problem] Feeds are efficiently supplied into a fish preserve.

[Solution] The feeding device 100 supplies feeds to fish in a fish preserve 600. The feeding device 100 includes a storage unit 1 storing the feeds E, a pump device supplying water W, and a mixing unit 2, 6. The mixing unit 2, 6 mixes the feeds E supplied from the storage unit 1 with the water W. The pump device 3 conveys the mixed liquid F of the feeds E and the water W under pressure to the hoses 4 for feeding.

## Description

### TECHNICAL FIELD

The present invention relates to a feeding device and a feeding system.

### BACKGROUND ART

Conventionally, a device is known for feeding fish cultivated in an offshore fish preserve. For example, in Patent Document 1, powdery artificial compounded feeds in a storage tank are supplied onto a water surface of a predetermined fish farming tank by pneumatic transportation by an air flow of compressed air, and sprayed from a plurality of feeding nozzles that rotate on their axes.

### PRIOR ART DOCUMENT

### PATENT DOCUMENT

Patent Document 1: Japanese Patent Application Laid-Open No. H7-115868

### SUMMARY OF INVENTION

### TECHNICAL PROBLEM

However, feeds sprayed by the air flow is likely to be carried out of the fish preserve well and lost. For example, the sprayed feeds are likely to be blown away by wind on water before reaching the water surface. Further, even when the feeds land on the water, since the feeds are dry, it takes a long time for the feeds to be blended with the water and sink. Therefore, the bait is likely to be swept by waves near the water surface before sinking. Therefore, when the feeds are sprayed by the air flow, a feeding efficiency is likely to decrease, and thus the feeds may not be sufficiently supplied to the fish preserve.

In view of the above circumstances, an object of the present invention is to efficiently supply feeds to the fish preserve.

### SOLUTION TO PROBLEM

In order to achieve the above object, a feeding device according to an aspect of the present invention feeds fish in a fish preserve. The feeding device includes a storage unit storing the feeds, a pump device for supplying water, and a mixing unit. The mixing unit mixes the feeds supplied from the storage unit with the water. The pump device conveys mixed liquid of the feeds and the water under pressure to hoses for feeding.

In order to achieve the above object, a feeding system according to an aspect of the present invention includes the above feeding device and the hoses. The hoses discharge the mixed liquid supplied from the feeding device to the fish preserve.

Further features and advantages of the present invention will become more apparent from the embodiments described below.

### ADVANTAGEOUS EFFECTS OF INVENTION

According to the present invention, it is possible to efficiently supply feeds into a fish preserve.

### BRIEF DESCRIPTION OF DRAWINGS

Fig. 1 is a schematic view illustrating a configuration example of a feeding device according to a first embodiment.
Fig. 2 is as schematic view illustrating a configuration example of one site of a fish preserve.
Fig. 3 is a block diagram illustrating a configuration of a feeding system including a feeding device.
Fig. 4A is a schematic view illustrating a first configuration example of a hose.
Fig. 4B is a schematic view illustrating a second configuration example of a hose.
Fig. 4C is a schematic view illustrating a third configuration example of a hose.
Fig. 5 is a schematic view illustrating a configuration example of a feeding device according to a second embodiment.
Fig. 6 is a schematic view illustrating a configuration example of a feeding device according to a third embodiment.
Fig. 7 is a cross-sectional view illustrating a configuration example of a mixing unit according to the third embodiment.
Fig. 8 is a schematic view illustrating a configuration example of a feeding device according to a modified example of the third embodiment.
Fig. 9 is a cross-sectional view illustrating a configuration example of a mixing unit in a modified example of the third embodiment.
Fig. 10A is a schematic view illustrating a configuration example of one site of a fish preserve according to a fourth embodiment.
Fig. 10B is a schematic view illustrating another configuration example of one site of the fish preserve according to the fourth embodiment.
Fig. 11 is a block diagram illustrating a configuration of a feeding system according to the fourth embodiment.

### DESCRIPTION OF EMBODIMENTS

Hereinafter, embodiments of the present invention will be described with reference to the drawings.

### 1. First Embodiment

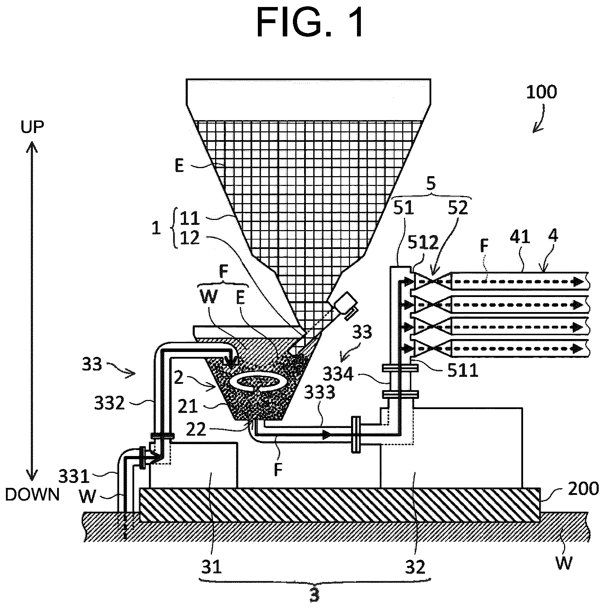

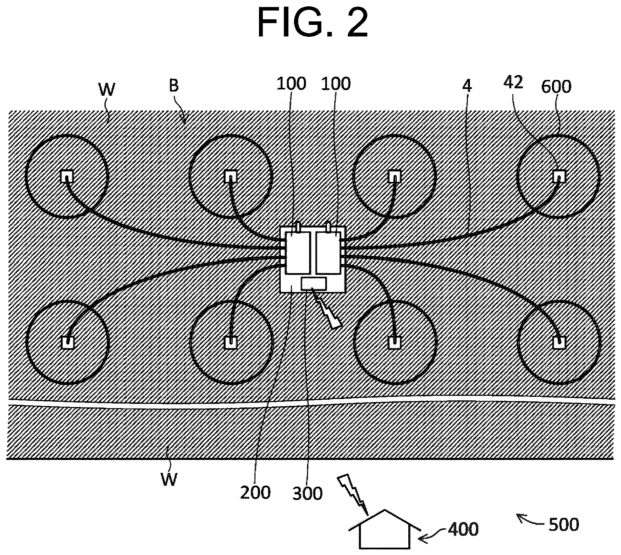

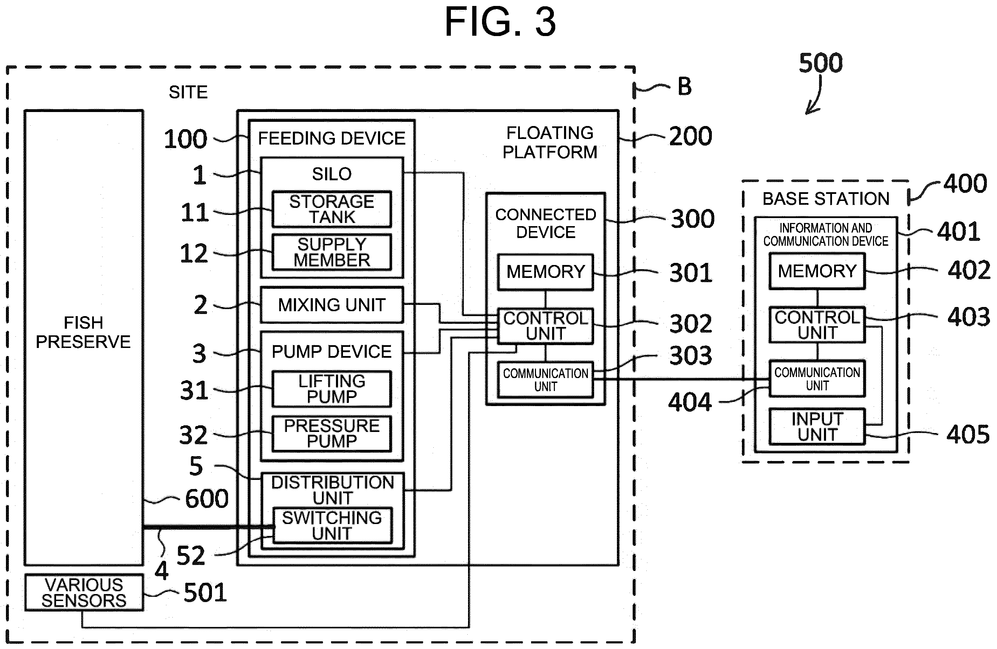

Fig. 1 is a schematic view illustrating a configuration example of a feeding device 100 according to a first embodiment. Fig. 2 is as schematic view illustrating a configuration example of one site B of a fish preserve 600. Fig. 3 is a block diagram illustrating a configuration of a feeding system 500 including a feeding device 100.

### 1-1. Feeding System 500 and Fish Preserve 600

The feeding system 500 is a facility for feeding fish in a plurality of fish preserves 600. In the present specification, "fish" refers to aquatic organisms that can be cultivated in the fish preserve 600, and may include not only fish such as yellowtails and sea breams, but also other aquatic organisms for cultivation such as shrimps. Furthermore, "fish" may be not only marine organisms, but also organisms living in freshwater or brackish water. That is, the "water W" in the present specification is seawater in the embodiment, but is not limited to this example, and may be freshwater (or purified water) or brackish water.

In the present embodiment, the fish preserve 600 is an offshore fish preserve which has a circular shape with a diameter of about 20 [m] as viewed from above, and which is partitioned underwater (in the sea) with nets or the like, allowing water to flow between the inside and the outside. In one site B as illustrated in Fig. 2, for example, eight fish preserves 600 are two dimensionally arranged in two columns and four rows at intervals of 20 [m] or more.

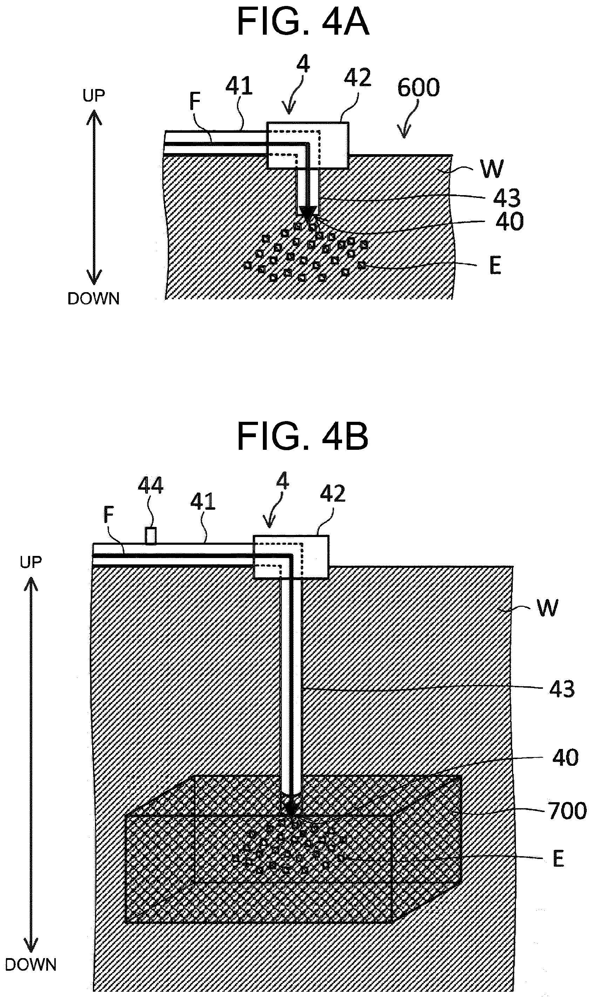

However, the present invention is not limited to the example according to the present embodiment, and a size, a form, the number of arrangements, an interval, an arrangement, and the like of the fish preserve 600 are not limited to the example of Fig. 2, and can be variously changed. In addition, at least one fish preserve 600 may be a water tank for cultivation installed on land, or may be a submersible fish preserve 700 (refer to Fig. 4B described later) entirely submerged in water. Alternatively, the at least one fish preserve 600 may be an aquatic fish preserve installed in a lake, a pond, a river, a reservoir, or the like.

The feeding system 500 includes a feeding device 100, a floating platform 200, a connected device 300, and a base station 400. The feeding device 100 is a device for feeding fish in a fish preserve 600. The floating platform 200 floats on a water surface (on the ocean) with the feeding device 100 and the connected device 300 placed thereon. The connected device 300 controls the feeding device 100 and is capable of communicating with the base station 400. The base station 400 is disposed on land, on a ship, or the like and is capable of communicating with the connected device 300. A worker of the feeding system 500 performs monitoring and remote operation of the feeding device 100 in the base station 400 via the connected device 300.

In the feeding system 500 of Fig. 2, two feeding devices 100 are installed on one floating platform 200. Each feeding device 100 is connected to four fish preserves 600 via hoses 4 described later so as to be able to feed, and supplies mixed liquid F of feeds and water (seawater) to the fish preserves 600. However, the number of the feeding devices 100 arranged in one site B and/or one floating platform 200 is not limited to the example of Fig. 2, and may be, for example, one or other than four. In addition, at least one feeding device 100 may be installed on land. The number of fish preserves 600 to which one feeding device 100 is connected so as to be able to feed is not limited to the example of Fig. 2, and may be, for example, one or other than four.

**In** the present embodiment, fish of the same type are accommodated in the fish preserves 600 fed from the same feeding device 100. However, this example does not exclude a configuration in which fish of a type different from fish accommodated in some other fish preserves 600 are accommodated in at least some fish preserves 600 among the fish preserves 600 fed by the same feeding device 100. For example, if the feeds to be given is the same, the kinds of fish in some fish preserves 600 may be different.

The connected device 300 includes a memory 301, a control unit 302, and a communication unit 303. These are arranged on the feeding device 100 side. The memory 301 is a non-transitory storage medium that maintains storage even when power supply is stopped, and stores programs, data, and the like necessary for the feeding device 100, the control unit 302, the communication unit 303, and the like. The control unit 302 receives an output signal from each component of the feeding device 100 and the connected device 300, and controls components that needs to be controlled in the feeding device 100 and the connected device 300. The communication unit 303 is capable of communicating with (an information and communication device 401 described later of) the base station 400 in a wireless (or wired) manner.

An information and communication device 401 is installed in the base station 400. The information and communication device 401 includes a memory 402, a control unit 403, a communication unit 404, and an input unit 405. The memory 402 is a non-transitory storage medium that maintains storage even when power supply is stopped, and stores programs, data, and the like necessary for each component (the control unit 403, the communication unit 404, and the like) of the information and communication device 401. The control unit 403 controls the control unit 302 of the connected device 300 and components (the communication unit 404 or the like) of the information and communication device 401 that need to be controlled. The communication unit 404 is capable of communicating with the communication unit 303 of the connected device 300 in a wireless or wired manner. The input unit 405 receives an operation input and outputs an output signal based on the operation input to the control unit 403.

**In** addition, the feeding system 500 further includes various sensors 501. The sensors 501 include, for example, an imaging device that monitors an inside of the fish preserve 600, a temperature sensor that detects a water temperature of at least one of the fish preserves 600 or the site B on the ocean, a pressure sensor that detects a flow pressure of the mixed liquid F in the hose 4, and the like.

According to the feeding system 500, since the feeding device 100 can be installed on the floating platform 200 that floats on the water surface, the feeding device 100 can be disposed near the fish preserve 600 installed in the sea (or a lake, a pond, a river, a reservoir, or the like). Therefore, the feeding system 500 can easily obtain the water W used for mixing with the feeds E and conveying the mixed liquid F under pressure by the pump device 3 described later. **In** addition, since the hose 4 (particularly, a transfer hose 41) that discharges the mixed liquid F can be shortened as compared with a case where the feeding device 100 is installed on land or the like, a pressure loss from an inlet to an outlet of the hose 4 can be reduced. Therefore, it is not necessary to dispose the pump device 3 (particularly, a pressure pump 32 described later) that is larger and more expensive and has a large output (discharge pressure), and thus, it is possible to suppress an increase in the size and cost of the feeding device 100.

According to the feeding system 500, the worker can remotely operate the feeding device 100 at a location away from the feeding device 100.

### 1-2. Feeding Device 100

Next, a configuration example of the feeding device 100 according to the first embodiment will be described with reference to Fig. 1. As illustrated in Fig. 1, the feeding device 100 includes a silo 1, a mixing unit 2, a pump device 3, and hoses 4. The silo 1 is a storage unit that stores feeds E for fish in the fish preserve 600, and supplies the feeds E to the mixing unit 2. The feeds E are square pellets of about 1 to 2 [cm] in the present embodiment. However, a form (size, shape, and the like) of the feeds E is not limited to this example. The mixing unit 2 mixes the feeds E with the water W. The pump device 3 is a device that supplies the water W, pumps up the water W from water, and supplies the water W into the mixing unit 2. The pump device 3 conveys the mixed liquid F of the feeds E and the water W under pressure to the hoses 4 for feeding. The hoses 4 convey the mixed liquid F to the fish preserves 600. The mixed liquid F supplied from the feeding device 100 excluding the hoses 4 (for example, a delivery port 512 of a distribution unit 5 or the other end portion of a pressure pipe 334 described later) is discharged to the fish preserves 600.

According to the feeding device 100, by feeding the mixed liquid F obtained by mixing the feeds E with the water W, for example, even when the mixed liquid F is discharged on the water surface, (the mixed liquid F of) the feed E is less likely to be blown off to the outside of the fish preserve 600 by the wind on the water or the like as compared with a case where the feeds E alone are sprayed on the water surface. Further, when the mixed liquid F is discharged, the feeds E have already been blended with the water W, and thus the feeds E are likely to sink. Therefore, the feeds E hardly flow out of the fish preserve 600 due to waves on the water. Further, the feeds E easily sink immediately to a depth of water where the fish in the fish preserve 600 swim. Accordingly, the feeds E can be efficiently supplied into the fish preserve 600.

### 1-2-1. Silo 1

The silo 1 includes a storage tank 11 for the feeds E and a supply member 12. The supply member 12 is, for example, a screw conveyor, and supplies the feeds E discharged from the storage tank 11 to the mixing unit 2 in accordance with control of the control unit 302.

### 1-2-2. Mixing Unit 2

The mixing unit 2 has a mixing tank 21 for the feeds E and the water W. Preferably, the water W supplied from the pump device 3 to the mixing tank 21 flows near an inner surface of the mixing tank 21 in a direction intersecting with a vertical direction along the inner surface (for example, in a direction parallel to the water surface on which the floating platform 200 floats). More preferably, the inner surface of the mixing tank 21 has an inverted conical shape, and a diameter as viewed from above decreases toward the lower side. A discharge port 22 is disposed at a vertex of the inverted conical shape (that is, a lower end portion of the mixing tank 21).

In this way, a spiral water flow is generated in the mixing tank 21 by flow of the water W supplied from the pump device 3. The feeds E supplied to the mixing tank 21 ride on the spiral water flow and are mixed with the water W. Therefore, even if there is no stirrer, the mixed liquid F is sufficiently stirred, and the feeds E are sufficiently and uniformly mixed with the water W. In addition, since the stirrer is not used, it is possible to suppress or prevent the feeds E from being crushed while being mixed with the water W.

However, the above example does not exclude a configuration in which the spiral water flow is not generated in the mixing tank 21 by the flow of the water W supplied from the pump device 3. For example, the mixed liquid F of the feeds E and the water W in the mixing tank 21 may be stirred by a stirrer (not illustrated).

### 1-2-3. Pump Device 3

In the present embodiment, the pump device 3 includes a lifting pump 31, a pressure pump 32, and a pipe 33. The lifting pump 31 supplies the water W to the mixing tank 21. The pressure pump 32 is a solid material transfer pump such as a vortex pump, and conveys the mixed liquid F discharged from the mixing tank 21 under pressure to the hoses 4 for feeding. The solid material transfer pump can suck and convey the mixed liquid F containing solid materials (for example, the feeds E) under pressure without crushing the solid materials. The pipe 33 includes an intake pipe 331, a lifting pipe 332, an inflow pipe 333, a pressure pipe 334, and the like.

The intake pipe 331 is a flow path of the water W in the water and between the lifting pumps 31. One end of the intake pipe 331 is connected to a water supply port of the lifting pump 31. The other end of the intake pipe 331 is disposed in the water.

The lifting pipe 332 is a flow path of the water W between a drain port of the lifting pump 31 and (preferably an upper portion of) the mixing tank 21. One end of the lifting pipe 332 is connected to the drain port of the lifting pump 31. The other end of the lifting pipe 332 is connected to the mixing tank 21.

The inflow pipe 333 is a flow path of the mixed liquid F between the discharge port 22 of the mixing tank 21 and an inflow port of the pressure pump 32. One end of the inflow pipe 333 is connected to the discharge port 22 of the mixing tank 21, and the other end of the inflow pipe 333 is connected to the inflow port of the pressure pump 32.

The pressure pipe 334 is a flow path of the mixed liquid F from the discharge port of the pressure pump 32 to the hoses 4. One end of the pressure pipe 334 is connected to the discharge port of the pressure pump 32. The other end of pressure pipe 334 is connected to the hoses 4, and in the present embodiment, is connected to one end of the hoses 4 via a distribution unit 5 described later.

In the feeding device 100 according to the first embodiment, the pumping up the water W and the conveying the mixed liquid F of the feeds E and the water W under pressure are performed by the different pumps 31 and 32, so that an increase in the size of the pump device 3 can be prevented as compared with a configuration in which both are performed by the same pump.

### 1-2-4. Hose 4

The hose 4 is a flow path of the mixed liquid F to the fish preserve 600. A feeding port 40 (an end portion on a side opposite to the feeding device 100) through which the mixed liquid F of the hose 4 is discharged is disposed in each fish preserve 600. In the present embodiment, there are four hoses 4, and one hose 4 is connected to one fish preserve 600. However, the number of hoses 4 is not limited to this example, and a plurality of hoses 4 may be connected to at least one fish preserve 600. The number of the hoses 4 may be equal to or more than the number of the fish preserve 600 fed by one feeding device 100.

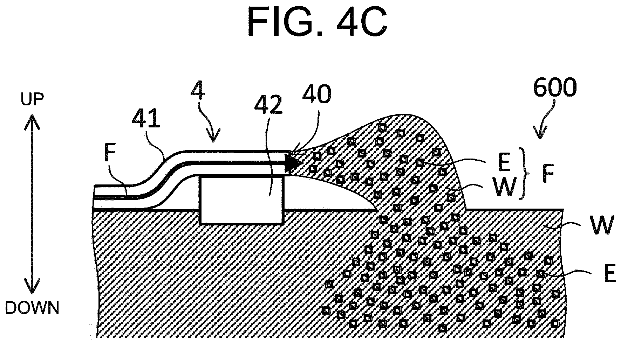

Figs. 4A to 4C are schematic diagrams illustrating a configuration example of the hose 4. Fig. 4A is a schematic diagram illustrating a first configuration example of the hose 4. Fig. 4B is a schematic diagram illustrating a second configuration example of the hose 4. Fig. 4C is a schematic diagram illustrating a third configuration example of the hose 4.

### 1-2-4-1. First Configuration Example of Hose 4

Preferably, as illustrated Fig. 4A, the feeding port 40 for discharging the mixed liquid F of at least a portion of the hose 4 is disposed below the water surface of the fish preserve 600. In this way, the feeds can be fed into water, so that it is possible to further suppress the flow of the feeds E to the outside of the fish preserve 600 due to wind, waves, or the like on the water compared to feeding from above the water surface. In particular, by adjusting a water depth at which the feeding port 40 is disposed, the outflow of the feeds E to the outside of the fish preserve 600 by waves can be effectively suppressed or prevented. Therefore, since loss of the feeds E can be suppressed, the feeds can be more efficiently supplied into the fish preserve 600.

For example, in the first configuration example, as illustrated in Fig. 4A, the feeding port 40 of the hose 4 is disposed in water. The hose 4 has a transfer hose 41, a float 42, and a feeding pipe 43. The transfer hose 41 extends from the feeding device 100 (excluding the hose 4) to the fish preserve 600. The transfer hose 41 may be a flexible hose, or may be a pipe made of metal or resin. The float 42 floats on the water surface in the fish preserve 600 on the water. The feeding pipe 43 extends at least in the up-down direction from the float 42.

The mixed liquid F is supplied to one end (an end on the side of the feeding device 100) of the transfer hose 41. The other end (an end on the side opposite to the feeding device 100) of the transfer hose 41 is fixed to the float 42, and is connected to an upper end of the feeding pipe 43. A lower end of the feeding pipe 43 is the feeding port 40 in the second configuration example, is disposed in water, and is preferably disposed at a water depth at which fish swim. Preferably, the float 42 and the feeding pipe 43 are disposed at the center of the fish preserve 600 as viewed from above.

In the hose 4 according to the first configuration example, since the feeds can be supplied into the water in the fish preserve 600, it is possible to prevent some of the feeds E (the mixed liquid F) from flowing out of the fish preserve 600 due to wind and waves on the water surface. Therefore, the feeding device 100 can efficiently feed fish in the fish preserve 600.

### 1-2-4-2. Second Configuration Example of Hose 4

Alternatively, as illustrated in Fig. 4B, the hose 4 may be connected to a submersible fish preserve 700 in water, and the mixed liquid F (that is, the feeds E) may be discharged into the submersible fish preserve 700. For example, in the second configuration example, the hose 4 includes a transfer hose 41, a float 42, a feeding pipe 43, and an air vent valve 44. The configuration of the transfer hose 41 and the float 42 is the same as that in the first configuration example. Preferably, the float 42 is disposed directly above the submersible fish preserve 700. The feeding pipe 43 extends at least in the up-down direction from the float 42. An upper end of the feeding pipe 43 is connected to the above-described other end of the transfer hose 41. A lower end of the feeding pipe 43 is disposed in the submersible fish preserve 700 in water, and is preferably disposed in the central portion of the submersible fish preserve 700. The air vent valve 44 is connected to the transfer hose 41 and discharges air in the transfer hose 41 to the outside.

When air is mixed in the mixed liquid F, it is necessary to increase the feeding pressure of the mixed liquid F. In particular, when the mixed liquid F is conveyed to the submersible fish preserve 700 installed at a location below the water surface under pressure as illustrated in Fig. 4B, it is necessary to further increase the feeding pressure. Therefore, by removing the air in the mixed liquid F through the arrangement of the air vent valve 44, the mixed liquid F can be delivered and fed to the submersible fish preserve 700 at the feeding pressure close to the necessary minimum.

In the hose 4 according to the second configuration example, even if at least one of the fish preserves 600 is the submersible fish preserve 700, it is possible to feed fish in the submersible fish preserve 700.

### 1-2-4-3. Third Configuration Example of Hose 4

As illustrated in Fig. 4C, the mixed liquid F may be sprayed on the water surface. For example, in the third configuration, the hose 4 includes a transfer hose 41 and a float 42. The configuration of the transfer hose 41 is the same as that in the first configuration example. The float 42 floats on the water surface in the fish preserve 600 on the water and fixes the above-described other end of the transfer hose 41 on the water surface. The above-described other end of the transfer hose 41 is an end portion of the transfer hose 41 on a side opposite to the feeding device 100, and is the feeding port 40 in the third configuration example. Preferably, the float 42 and the above-described other end of the transfer hose 41 are disposed in a central portion of the fish preserve 600 as viewed from above.

In the hose 4 according to the third configuration example, fish in the fish preserve 600 can be fed from above the water surface. Since the weight of the mixed liquid F is much heavier than that of the feeds E alone, the mixed liquid F is less likely to be blown off to the outside of the fish preserve 600 by the wind above the water surface. Therefore, it is possible to suppress a decrease in the feeding efficiency to the fish preserve 600.

### 1-2-4-4. Modified Example of Hose 4

As described above, the hose 4 is a component of the feeding device 100 in the present embodiment. However, the hose 4 is not limited to this example, and may be a component of the feeding system 500 but not a component of the feeding device 100.

### 1-2-5. Distribution Unit 5

As illustrated in Fig. 1, the feeding device 100 further includes a distribution unit 5. The distribution unit 5 distributes the mixed liquid F conveyed from (the pressure pump 32 of) the pump device 3 under pressure to at least one of the hoses 4. In the present embodiment, the distribution unit 5 includes a distribution pipe 51 and a plurality of switching units 52. The distribution pipe 51 is provided with an inflow port 511 and a plurality of delivery ports 512. That is, the distribution pipe 51 of the distribution unit 5 includes the inflow port 511 and the plurality of delivery ports 512.

The distribution pipe 51 is connected to the delivery port of the pressure pump 32 via the pressure pipe 334 and the inflow port 511. The mixed liquid F conveyed from the pressure pump 32 under pressure flows into the inside of the distribution pipe 51 from the inflow port 511. A switching unit 52 is disposed in each delivery port 512. One end of each switching unit 52 is connected to the delivery port 512. The other end is connected to the hose 4. Each delivery port 512 delivers the mixed liquid F to the hose 4 via the switching unit 52.

Each switching unit 52 is a switching valve capable of switching between delivery and blocking of the mixed liquid F at each delivery port 512, and can pass at least the feeds E in the mixed liquid F without granulation when the mixed liquid F can be delivered. For example, when the switching unit 52 is in the open state, the mixed liquid F is delivered to the hose 4 from the delivery port 512 where the switching unit 52 is disposed. On the other hand, when the switching unit 52 is in the closed state, the delivery port 512 where the switching unit 52 is disposed is blocked, and the mixed liquid F is not delivered to the hose 4.

In the present embodiment, each switching unit 52 is, for example, an electric valve controlled by the control unit 302. However, the present disclosure is not limited to this example, and at least one of the switching units 52 may be manually operable.

Each of delivery ports 512 is connected to the respective hose 4 via the switching units 52. In this way, the hose 4 for delivering the mixed liquid F can be selected by switching each switching unit 52. Therefore, feeds can be supplied to the fish preserve 600 to which the selected hose 4 is connected. That is, the fish preserve 600 to be fed can be easily selected and the feeds can be supplied to the fish preserve 600 at any time.

Preferably, at least a portion of the distribution unit 5 is disposed below the discharge port 22 for discharging the mixed liquid F in the mixing unit 2. Further preferably, the entire distribution unit 5 is disposed below the discharge port 22. In this way, it is possible to further reduce the difference in the hydraulic head pressure between the distribution unit 5 and the discharge port 22 of the mixing unit 2. Therefore, it is possible to suppress an increase in the output (feeding pressure) required for (the pressure pump 32 of) the pump device 3. Therefore, it is possible to suppress an increase in the size and cost of the feeding device 100 (particularly, the pressure pump 32). However, this example does not exclude a configuration in which the entire distribution unit 5 is not disposed below the discharge port 22. For example, the entire distribution unit 5 may be disposed above the discharge port 22.

Preferably, the inflow port 511 is disposed at the lower end of the distribution pipe 51. In this way, the mixed liquid F flows upward in the distribution pipe 51. Therefore, it is possible to prevent the feeds E from being accumulated in the lower portion of the distribution pipe 51 and obstructing the flow of the mixed liquid F. However, this example does not exclude a configuration in which the inflow port 511 is disposed at a position other than the lower end of the distribution pipe 51. For example, the inflow port 511 may be disposed at an upper end of the distribution pipe 51, or may be disposed at a side surface (for example, a central portion in the up-down direction) of the distribution pipe 51.

In the present embodiment, four delivery ports 512 are arranged in the up-down direction. However, the number of the delivery ports 512 is not limited to this example, and may be one or other than four. Further, the arrangement of the delivery port 512 is not limited to the above-described example, and various arrangements may be adopted.

The above example does not exclude a configuration in which the feeding device 100 does not include the distribution unit 5. For example, when one feeding device 100 feeds one fish preserve 600, the distribution unit 5 may be omitted, and one hose 4 may be connected to the other end of the pressure pipe 334 via the switching unit 52.

### 2. Second Embodiment

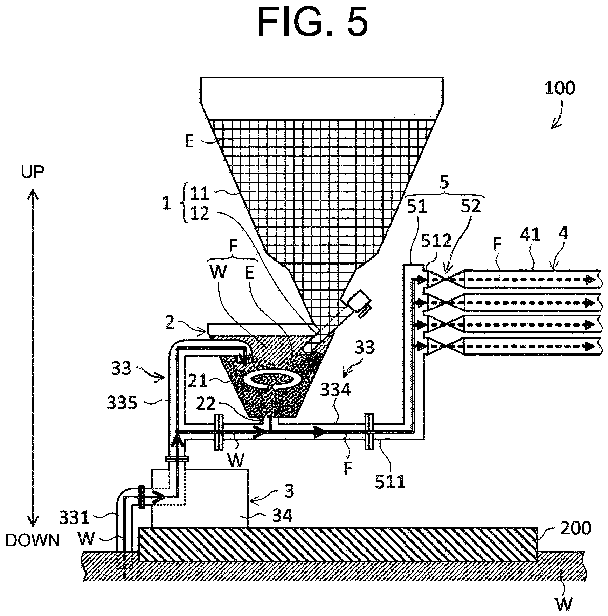

Next, a second embodiment will be described with reference to Fig. 5. Fig. 5 is a schematic view illustrating a configuration example of a feeding device 100 according to a second embodiment. Hereinafter, the configuration of the second embodiment different from that of the above-described first embodiment will be described. **In** addition, components similar to those in the first embodiment will be given the same reference numerals, and description thereof may be omitted.

**In** the second embodiment, the pump device 3 includes a pump 34 and a pipe 33. The pump 34 pumps up the water W from the water, and supplies a portion of the pumped up water W to the mixing tank 21. Further, the pump 34 conveys the mixed liquid F discharged from the mixing tank 21 together with another portion of the pumped up water W under pressure to the hoses 4 for feeding. The pipe 33 includes an intake pipe 331, a pressure pipe 334, and a branch pipe 335. The branch pipe 335 has one portion on the inflow side. On the other hand, the branch pipe 335 has two portions on the outflow side.

For example, one end of the intake pipe 331 is connected to the water supply port of pump 34. The other end of the intake pipe 331 is disposed in the water.

An end of the branch pipe 335 on the inflow side is connected to the drain port of the pump 34. One end of the branch pipe 335 on the outflow side is connected to the mixing tank 21. Accordingly, a portion of the water W pumped up from the water is supplied to the mixing tank 21. The pump 34 and the mixing tank 21 may be directly connected to each other or may be connected to each other via a regulating valve capable of regulating the flow rate of the water W. The regulating valve may be a solenoid valve controlled by the control unit 302 or may be manually operable.

The other end of the branch pipe 335 on the outflow side is connected to the discharge port 22 of the mixing tank 21 and is connected to one end of the pressure pipe 334. Thus, the mixed liquid F discharged from the mixing tank 21 can be mixed with the water flow from the other end portion on the outflow side to the one end of the pressure pipe 334.

The present disclosure is not limited to the above-described example, and the other end of the branch pipe 335 on the outflow side may be connected to the discharge port 22 of the mixing tank 21 and may be connected to the inflow port 511 of the distribution unit 5. That is, the pressure pipe 334 may be omitted.

In the feeding device 100 according to the second embodiment, by pumping up the water W and conveying the mixed liquid F of the feeds E and the water W under pressure by the same pump 34, it is possible to omit installation of the solid material transfer pump (for example, the pressure pump 32), and to reduce the number of pumps included in the pump device 3. In addition, the pump 34 can convey the mixed liquid F under pressure by putting the mixed liquid F on the water flow conveyed to the hose 4 for feeding under pressure. Therefore, since the mixed liquid F can be conveyed under pressure without passing through the pump 34, the feeds E can be prevented from being crushed in the pump 34. Further, a general pump can be adopted as the pump 34 without installing a special pump such as a solid material transfer pump. Therefore, since it is not necessary to install an expensive pump, it is possible to suppress the increase in the cost of the feeding device 100.

### 3. Third Embodiment

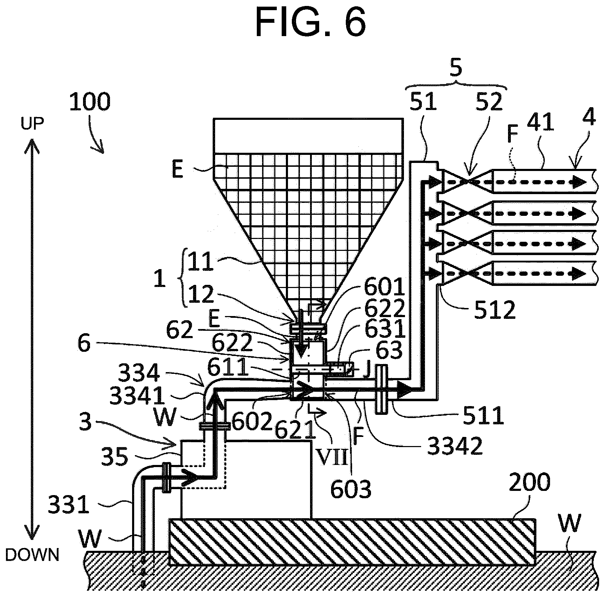

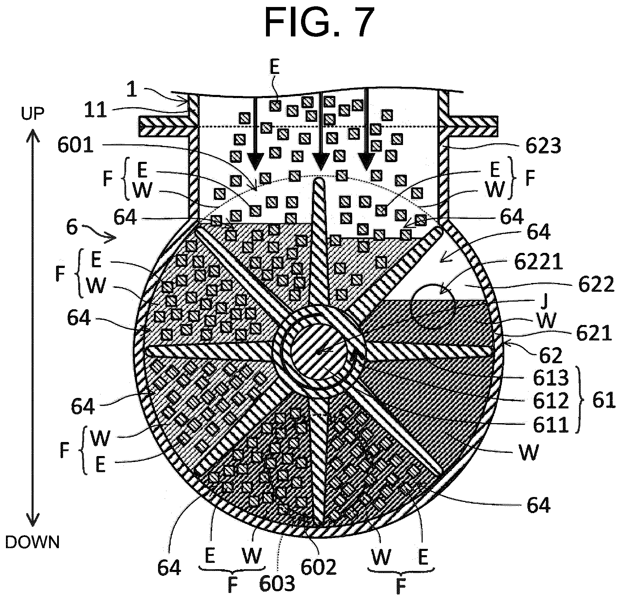

Now, a third embodiment will be described with reference to Figs. 6 and 7. Fig. 6 is a schematic view illustrating a configuration example of a feeding device 100 according to a third embodiment. Fig. 7 is a cross-sectional view illustrating a configuration example of a mixing unit 6 according to the third embodiment.

Fig. 7 is a cross-sectional view of the mixing unit 6 along the two-dot chain line VII in Fig. 6. In Fig. 7, the cross section of the mixing unit 6 is viewed from the upstream side (for example, the other side in the axial direction described later) to the downstream side (for example, one side in the axial direction described later) in the pumping direction of the pump device 3.

In Figs. 6 and 7, the rotation direction of the rotor 61 is counterclockwise in a plan view of viewing the downstream side from the upstream side. However, the present disclosure is not limited to this example, and the rotation direction of the rotor 61 may be clockwise in the above-described plan view.

Hereinafter, in the third embodiment, a configuration different from that of the first embodiment and the second embodiment will be described. In addition, components similar to those in the above-mentioned first and second embodiments will be given the same reference numerals, and description thereof may be omitted.

In the third embodiment, the feeding device 100 includes a mixing unit 6 instead of the mixing unit 2. The mixing unit 6 is, for example, a rotary valve. The discharge port of the storage tank 11 of the silo 1 is connected to the supply port 601 of the mixing unit 6. The silo 1 and the mixing unit 6 may be directly connected to each other or may be connected to each other via a supply member 12.

The pressure pipe 334 includes an upstream pipe 3341 and a downstream pipe 3342.

One end of the upstream pipe 3341 is connected to a discharge port of the pump 35, and the other end thereof is connected to a water inlet port 602 described later, of the mixing unit 6. Thus, the water W conveyed from the pump 35 under pressure flows into the water inlet port 602 via the upstream pipe 3341. Preferably, the inner diameter of the upstream pipe 3341 decreases toward the mixing unit 6. In this way, the flow rate and pressure of the water W flowing into the mixing unit 6 from the water inlet port 602 can be increased. Therefore, the mixed liquid F in the mixing unit 6 can be efficiently discharged from the discharge port 603 along with the water flow. However, this example does not exclude a configuration in which the inside diameter of the upstream pipe 3341 does not decrease toward the mixing unit 6. For example, the inner diameter of the upstream pipe 3341 may be constant.

One end of the downstream pipe 3342 is connected to a discharge port 603 described later, of the mixing unit 6. The other end of the downstream pipe 3342 is connected to the inflow port 511 of the distribution unit 5. Accordingly, the mixed liquid F in the mixing unit 6 is supplied to the inflow port 511 of the distribution unit 5 along with the water flow discharged from the discharge port 603.

In the third embodiment, the mixing unit 6 includes a rotor 61, a case 62, a motor 63, and a plurality of distribution compartments 64. The rotor 61 is rotatable around a rotation axis J, and forms a plurality of distribution compartments 64 between the rotor 61 and the case 62. The rotation axis J extends in one direction intersecting the up-down direction, for example, in one direction perpendicular to the up-down direction in Fig. 6. Hereinafter, a direction in which the rotation axis J extends is referred to as an "axial direction". The case 62 surrounds and accommodates the rotor 61. The motor 63 rotates the rotor 61. The plurality of distribution compartments 64 are spaces independent of each other, are arranged in the circumferential direction around the rotation axis J, and are rotatable about the rotation axis J according to the rotation of the rotor 61.

### 3-1. Rotor 61 of Mixing Unit 6

The rotor 61 includes a rotor shaft 611, a cylindrical portion 612, and a plurality of blades 613. The rotor shaft 611 is a rod-shaped member extending in the axial direction along the rotation axis J. One end of the rotor shaft 611 protrudes outside the case 62 through a central opening of a side cover 622 on one side in the axial direction described later, of the case 62. The other end of the rotor shaft 611 is rotatably supported at a central portion of the side cover 622 on the other side in the axial direction. The cylindrical portion 612 is fixed to a radially outer surface of the rotor shaft 611 and surrounds the rotor shaft 611.

The plurality of blades 613 are disposed on the radially outer surface of the cylindrical portion 612 and arranged in the circumferential direction. Each blade 613 protrudes radially outward from the cylindrical portion 612 and extends in the axial direction.

### 3-2. Case 62

The case 62 includes a first cylindrical portion 621, a pair of side covers 622, and a second cylindrical portion 623.

The first cylindrical portion 621 has a cylindrical shape extending in the axial direction and surrounds the rotor 61. An inner surface of the first cylindrical portion 621 is in slidable contact with a radially outer end of each blade 613. The first cylindrical portion 621 is provided with a supply port 601 for the feeds E.

The pair of side covers 622 extend in a direction intersecting the axial direction, and in the present embodiment, extend radially outward from the rotation axis J. The pair of side covers 622 are disposed to face each other in the axial direction with the first cylindrical portion 621 and the rotor 61 other than the rotor shaft 611 interposed therebetween, and close the axial end of the first cylindrical portion 621.

An inner surface of each side cover 622 is in slidable contact with the axial end of the cylindrical portion 612 and the axial ends of the blades 613. For example, the side cover 622 on the axial one side is connected to the axial one end of the first cylindrical portion 621, and is in slidable contact with the axial one end of the cylindrical portion 612 of the rotor 61 and the axial one end of each of the plurality of blades 613. The side cover 622 on the axial other side is connected to the axial other end of the first cylindrical portion 621, and is in slidable contact with the axial other end of the cylindrical portion 612 of the rotor 61 and the axial other end of each of the plurality of blades 613.

A water inlet port 602 is disposed in a lower portion of the side cover 622 on the axial other side (upstream side). A discharge port 603 is disposed in a lower portion of the side cover 622 on the axial one side (downstream side). The discharge port 603 is connected to the water inlet port 602 via the same distribution compartment 64. Thus, a flow path from the water inlet port 602 to the discharge port 603 can be shortened in the case 62. Further, the mixing unit 6 can send out the mixed liquid F in the distribution compartment 64 from the discharge port 603 to the downstream pipe 3342 and the distribution unit 5 by a flow pressure of the water W flowing in from the water inlet port 602 to supply the mixed liquid F to the hoses 4. Therefore, the feeding device 100 can supply the mixed liquid F to the hoses 4 without disposing a pump or the like for sending the mixed liquid F between the discharge port 603 and the hoses 4.

Preferably, the discharge port 603 faces the water inlet port 602 in the axial direction and overlaps at least a portion of the water inlet port 602 as viewed in the axial direction. In this way, the flow path from the water inlet port 602 to the discharge port 603 in the case 62 can be made simpler and shorter, so that the mixing unit 6 can efficiently send out the mixed liquid F of the feeds E and the water W. Further, the feeds E is hardly crushed in the case 61. Therefore, it is possible to suppress or prevent the solid feeds E contained in the mixed liquid F from being granulated. In addition, the mixing unit 6 can suppress an increase in the content of the granulated feeds E in the mixed liquid F, or can reduce the content of the granulated feeds E.

However, this example does not exclude a configuration in which the discharge port 603 does not overlap the water inlet port 602 as viewed in the axial direction. For example, as viewed in the axial direction, the discharge port 603 may be disposed forward of and away from the water inlet port 602 in the rotational direction of the rotor 61. When a pump or the like that sends out the mixed liquid F is disposed between the discharge port 603 and the hoses 4, the water inlet port 602 and the discharge port 603 may not be connected to each other via the same distribution compartment 64.

Next, a water drain hole 6221 is disposed in one side cover 622. The water drain hole 6221 is disposed in the side cover 622 on one side in the axial direction in the present embodiment, and penetrates the side cover 622 in the axial direction. As viewed in the axial direction, the supply port 601 for the feeds E, the water inlet port 602 and the discharge port 603, and the water drain hole 6221 are arranged in this order on the forward side in the rotation direction of the rotor 61 (in other words, in one circumferential direction about the rotation axis J as the reference). That is, in the circumferential direction about the rotation axis **J,** the water drain hole 6221 is positioned further rearward in the rotation direction of the rotor 61 than the supply port 601 for the feed E, and further forward in the rotation direction than the water inlet port 602 and the discharge port 603.

The second cylindrical portion 623 is a cylindrical member that connects the supply member 12 of the silo 1 and the supply port 601. The feeds E in the silo 1 is supplied from the supply member 12 to the supply port 601 through the second cylindrical portion 623. **In** Figs. 6 and 7, the second cylindrical portion 623 has a cylindrical shape extending radially outward (upward) from an opening disposed on the radially outer surface of the first cylindrical portion 621 on the upper side of the first cylindrical portion 621. The inside of the second cylindrical portion 623 is connected to the inside of the first cylindrical portion 621. The second cylindrical portion 623 is provided with the supply port 601. As described above, the supply port 601 connects the storage tank 11 of the silo 1 and some of the distribution compartments 64 of which circumferential positions overlap the supply port 601.

### 3-3. Motor 63

In the present embodiment, the motor 63 is disposed on one side in the axial direction with respect to the case 62. The motor 63 has a rod-shaped motor shaft 631 extending in the axial direction along the rotation axis J. The other end in the axial direction of the motor shaft 631 is coupled to one end in the axial direction of the rotor shaft 611. The motor shaft 631 rotates in the circumferential direction about the rotation axis J together with the rotor 61 by driving the motor 63 according to control of the control unit 302.

### 3-4. Distribution Compartment 64

Each distribution compartment 64 is a space capable of accommodating the feeds E, the water W, the mixed liquid F, and the like, and is formed by the cylindrical portion 612 of the rotor 61, the blades 613 adjacent to each other in the circumferential direction, an inner surface of the first cylindrical portion 621 of the case 62, and inner surfaces of the pair of side covers 622.

As illustrated in Fig. 7, the distribution compartment 64 that rotates in the circumferential direction about the rotation axis J communicates with the discharge port of the storage tank 11 via the supply port 601 when the circumferential position of the distribution compartment 64 overlaps the supply port 601. As a result, the feeds E are supplied to the distribution compartment 64 and mixed with, for example, the water W accumulated in the distribution compartment 64. When the water W is not accumulated in the distribution compartment 64, the feeds E are accommodated in the distribution compartment 64.

When the rotating distribution compartment 64 overlaps the water inlet port 602 and the discharge port 603 in the circumferential direction, the water W flows into the distribution compartment 64 from the upstream pipe 3341. The mixed liquid F (or feeds E) in the distribution compartment 64 is pushed away by the water flow flowing in from the water inlet port 602 and is discharged from the discharge port 603 to the downstream pipe 3342. At this time, the distribution compartment 64 accommodates water W instead of the mixed liquid F (or feeds E).

When the distribution compartment 64 accommodating the water W rotates to the circumferential position communicating with the water drain hole 6221, a portion of the water W in the distribution compartment 64 is drained to the outside through the water drain hole 6221. As a result, a space capable of accommodating the feeds E is made in the distribution compartment 64. However, the water drainage step is not limited to the example of the present embodiment, and may be omitted. That is, the water drain hole 6221 may not be disposed in the case 62.

When the circumferential position of the drained distribution compartment 64 overlaps the supply port 601 again, the distribution compartment 64 communicates with the discharge port of the storage tank 11 via the supply port 601. As a result, the feeds E are supplied to the distribution compartment 64 and mixed with, for example, the water W accumulated in the distribution compartment 64.

The feeding device 100 can convey the mixed liquid F of the feeds E and the water W under pressure to the hoses 4 by repeating the above-described steps caused by rotation of the distribution compartment 64.

As described above, the mixing unit 6 according to the third embodiment is connected to the storage tank 11 via the supply port 601, so that the feeds E are supplied to the distribution compartment 64, and are mixed and blended with the water W remaining in the distribution compartment 64. The distribution compartment 64 is connected to the upstream pipe 3341 on the pump 35 side via the water inlet port 602, and is connected to the downstream pipe 3342 on the hose 4 side via the discharge port 603, by rotation of the rotor 61. As a result, the mixed liquid F of the feeds E and the water W follows the water flow conveyed by the pump 35 under pressure from the distribution compartment 64 described above, and is conveyed to the hoses 4 for feeding under pressure. Therefore, even if the water W is not supplied to the mixing unit 6 using a separate member, the feeds E can be mixed with the water W and conveyed under pressure using a simple constitution. Further, by adjusting the rotation speed of the rotor 61, it is possible to adjust the amount of the feeds E (in other words, the mixed liquid F) to be conveyed per unit time under pressure. Further, since the mixed liquid F can be conveyed under pressure without passing through the pump 35, the feeds E can be prevented from being crushed in the pump 35. Therefore, it is possible to suppress or prevent the solid feeds E contained in the mixed liquid F from being granulated. In addition, the mixing unit 6 can suppress or prevent granulation of feeds E contained in the mixed liquid F, and can reduce the content of the granulated feeds E in the mixed fluid F.

In the above-described example, as described above, the rotation axis J extends in one direction intersecting the up-down direction. However, the present disclosure is not limited to this example, and the rotation axis J may extend in the up-down direction or may extend in one direction obliquely intersecting the up-down direction. For example, the rotation axis J may be parallel to the vertical direction or may be parallel to the horizontal plane.

### 3-5. Modified Example of Third Embodiment

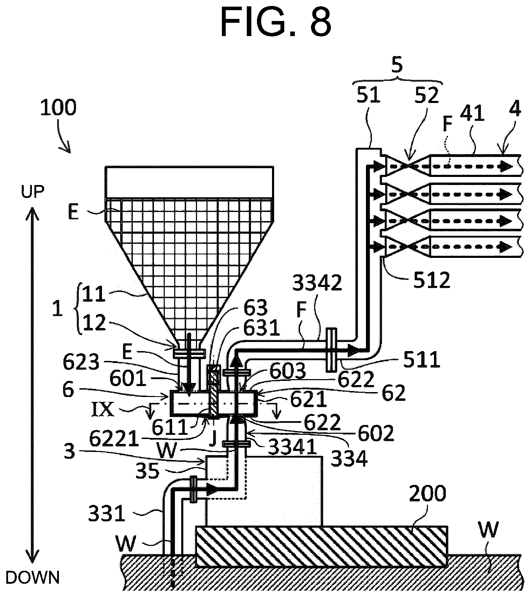

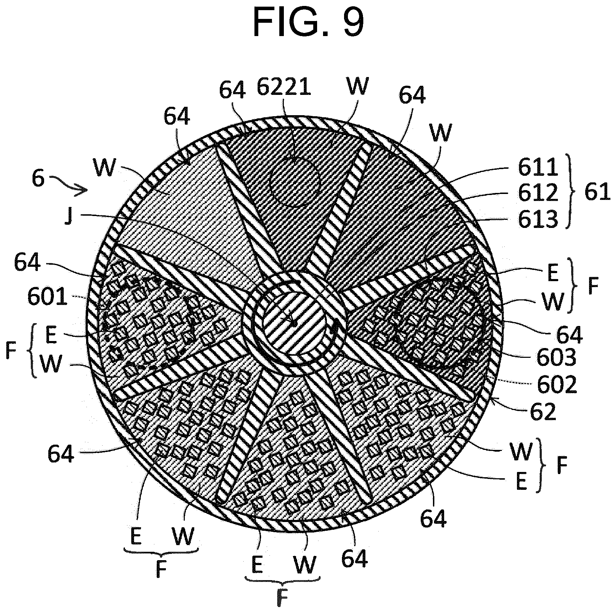

A modified example of the third embodiment will be described with reference to Figs. 8 and 9. Fig. 8 is a schematic view illustrating a configuration example of a feeding device 100 according to the modified example of the third embodiment. Fig. 9 is a cross-sectional view illustrating a configuration example of a mixing unit 6 in a modified example of the third embodiment.

Fig. 9 is a cross-sectional view of the mixing unit 6 along the two-dot chain line IX in Fig. 8. In Fig. 9, the cross section of the mixing unit 6 is viewed from the upper side to the lower side. In the modified example of the third embodiment, a direction in which the rotation axis J extends may be referred to as an "axial direction". Further, a direction from the lower side to the upper side of the rotation axis J may be referred to as "one axial direction", and a direction from the upper side to the lower side of the rotation axis J may be referred to as "the other axial direction".

In Figs. 8 and 9, the rotation direction of the rotor 61 is counterclockwise in a plan view of viewing from the upper side to the lower side of the rotation axis J. However, the present disclosure is not limited to this example, and the rotation direction of the rotor 61 may be clockwise in the above-described plan view.

Hereinafter, in the modified example of the third embodiment, a configuration different from that of the first to the third embodiments will be described. In addition, components similar to those of the above-mentioned first to third embodiments will be given the same reference numerals, and description thereof may be omitted.

In the modified example of the third embodiment, the rotation axis J of the rotor 61 in the mixing unit 6 extends in one direction intersecting the horizontal plane, and is parallel to the upward direction in Fig. 8. That is, the mixing unit 6 and the rotor 61 are placed horizontally. The rotor 61 is capable of rotating in one circumferential direction about the rotation axis J as the reference.

In the case 62 of the mixing unit 6, the pair of side covers 622 extend in the direction intersecting the rotation axis J and face each other in the direction in which the rotation axis J extends. For example, in Figs. 8 and 9, the pair of side covers 622 extend outward in the radial direction about the rotation axis J and face each other in the up-down direction.

A supply port 601 and a discharge port 603 are disposed in the side cover 622 on the upper side. A water inlet port 602 is disposed in the side cover 622 on the lower side. The discharge port 603 is connected to the water inlet port 602 via the same distribution compartment 64. Preferably, the discharge port 603 faces the water inlet port 602 in the axial direction and overlaps at least a portion of the water inlet port 602 as viewed in the axial direction.

However, this example does not exclude a configuration in which the discharge port 603 does not overlap the water inlet port 602 as viewed in the axial direction. For example, as viewed in the axial direction, the discharge port 603 may be disposed forward of and away from the water inlet port 602 in the rotational direction of the rotor 61. When a pump or the like that sends out the mixed liquid F is disposed between the discharge port 603 and the hoses 4, the water inlet port 602 and the discharge port 603 may not be connected to each other via the same distribution compartment 64.

Next, a water drain hole 6221 is further disposed in the side cover 622 on the lower side. The water drain hole 6221 penetrates the side cover 622 on the lower side in the thickness direction thereof (for example, the up-down direction). In a plan view of the mixing unit 6 as viewed from the upper side to the lower side, the supply port 601 for the feeds E, the water inlet port 602 and the discharge port 603, and the water drain hole 6221 are arranged in this order on the forward side in the rotation direction of the rotor 61 (in other words, in one circumferential direction about the rotation axis J as the reference). That is, in the circumferential direction about the rotation axis J, the water drain hole 6221 is positioned further rearward in the rotation direction of the rotor 61 than the supply port 601 for the feed E, and further forward in the rotation direction than the water inlet port 602 and the discharge port 603.

In the modified example of the third embodiment, the water drain hole 6221 is open at least downward (in the vertical direction). As a result, the mixing unit 6 can use gravity to discharge the water W through the water drain hole 6221. Therefore, the mixing unit 6 according to the modified example of the third embodiment can easily and efficiently discharge the water W accumulated in the distribution compartment 64 to the outside of the case 62 from the water drain hole 6221, for example, compared to a configuration in which the water drain hole 6221 is opened toward one direction parallel to the horizontal plane.

Preferably, in the above-described plan view, the discharge port 603 overlaps at least a portion of the water inlet port 602, in other words, is disposed in the axial direction with at least a portion of the water inlet port 602 (see Fig. 8).

In the above-described example, in the modified example of the third embodiment, the water inlet port 602 is disposed in the side cover 622 on the lower side, and the discharge port 603 is disposed in the side cover 622 on the upper side. Thus, the water W and the mixed liquid F flow at least upward in the case 61 of the mixing unit 6.

However, the water inlet port 602 is not limited to the above-described example, and may be disposed in the side cover 622 on the upper side in the modified example of the third embodiment. The discharge port 603 may be disposed in the side cover 622 on the lower side. That is, the water W and the mixed liquid F may flow at least downward in the case 61 of the mixing unit 6.

### 4. Fourth Embodiment

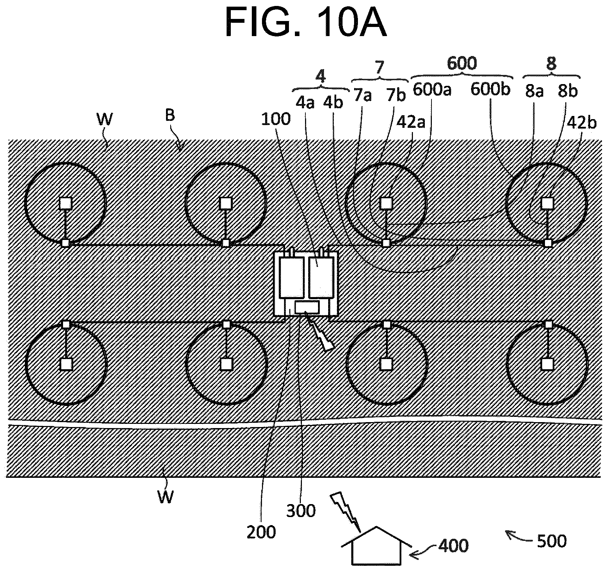

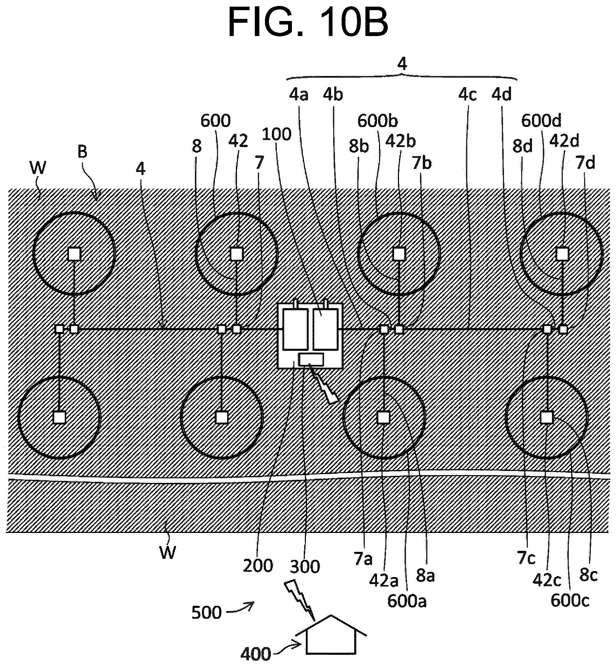

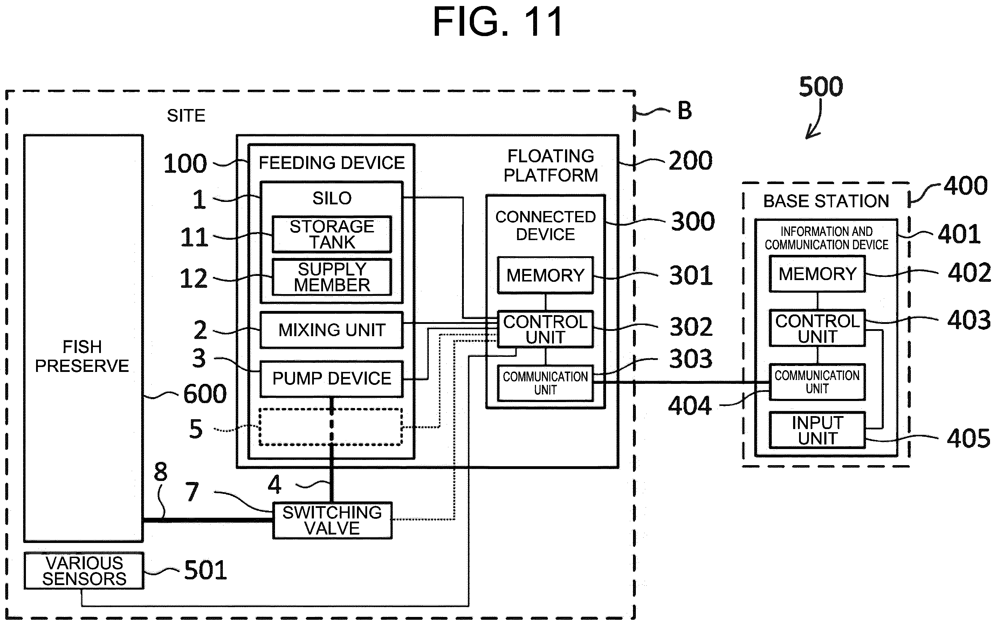

Next, a fourth embodiment will be described with reference to Figs. 10A to 11. Fig. 10A is a schematic view illustrating a configuration example of one site B of a fish preserve 600 according to the fourth embodiment. Fig. 10B is a schematic view illustrating another configuration example of one site B of a fish preserve 600 according to the fourth embodiment. Fig. 11 is a block diagram illustrating a configuration of a feeding system 500 according to the fourth embodiment. Hereinafter, the configuration of the fourth embodiment different from that of the above-described first to third embodiments will be described. The same components as those of the first to third embodiments are denoted by the same reference signs, and the description thereof will be occasionally omitted.

In the fourth embodiment, the feeding system 500 further includes a switching valve 7 and a feeding hose 8. The switching valve 7 is disposed in the middle (and at the end) of the hose 4 outside the feeding device 100, and switches between flowing and blocking of the mixed liquid F. At least some of the switching valves 7 may be, for example, electric valves controlled by the control unit 302. Further, at least some of the switching valves 7 may be manually operable. The feeding hose 8 is extended from the switching valve 7 and connected to a float 42 in the fish preserve 600, and the mixed liquid F can be supplied into the fish preserve 600, for example, in the same constitution as in Fig. 4A to Fig. 4C.

Here, in the fourth embodiment, the switching unit 52 of the feeding device 100 can be omitted. For example, the at least one hose 4 to which the switching valve 7 is connected can be directly connected to the delivery port 512. However, this example does not exclude a configuration in which the switching unit 52 is not omitted. In other words, at least one hose 4 to which the switching valve 7 is connected, may be connected to the delivery port 512 via the switching unit 52.

For example, in the Fig. 10A, two hoses 4 extend from one feeding device 100. Each hose 4 can deliver the mixed liquid F to two fish preserves 600 (600a, 600b). The switching valve 7 is disposed at an edge of the fish preserve 600 or the like. For example, the switching valve 7 includes switching valves 7a, 7b. The switching valve 7a is disposed at the edge of the fish preserve 600a. The switching valve 7b is disposed at the edge of the fish preserve 600b.

Each hose 4 has relay hoses 4a, 4b. The relay hose 4a connects (the delivery port 512 of) the feeding device 100 and the switching valve 7a, and can supply the mixed liquid F from (the delivery port 512 of) the feeding device 100 to the switching valve 7a. The relay hose 4b connects the switching valve 7a and the switching valve 7b, and can supply the mixed liquid F from the switching valve 7a to the switching valve 7b.

The feeding hose 8 includes feeding hoses 8a, 8b. The feeding hose 8a extends from the switching valve 7a to the float 42a of the fish preserve 600a. The tip of the feeding hose 8a is fixed to the float 42a. The feeding hose 8b extends from the switching valve 7b to the float 42b of the fish preserve 600b. The tip of the feeding hose 8b is fixed to the float 42b.

The switching valve 7a is, for example, a three-way valve. The switching valve 7a is capable of switching interchangeably between supply and cutoff of the mixed liquid F from the relay hose 4a to the feeding hose 8a. Thus, the switching valve 7a is capable of switching between supply and cutoff of the mixed liquid F to the fish preserve 600a. Further, the switching valve 7a is capable of switching interchangeably between supply and cutoff of the mixed liquid F from the relay hose 4a to the relay hose 4b. As a result, the switching valve 7a can switch between supply and cutoff of the mixed liquid F to the switching valve 7b.

The switching valve 7b is capable of switching interchangeably between supply and cutoff of the mixed liquid F from the relay hose 4b to the feeding hose 8b. Thus, the switching valve 7b is capable of switching between supply and cutoff of the mixed liquid F to the fish preserve 600b.

The present disclosure is not limited to the example in Fig. 10A, the switching valve 7b and the feeding hose 8b may be omitted. The switching valve 7b and the feeding hose 8b are arranged in the fish preserve 600 which is connected to the end of a hose 4. For example, in Fig. 10A, the tip of the relay hose 4b (i.e., the end of the hose 4) may be fixed to the float 42b of the fish preserve 600b located at the end. **In** this case, supply and cutoff of the mixed liquid F to the fish preserve 600b at the end are achieved by switching between supply and cutoff of the mixed liquid F from the relay hose 4a to the relay hose 4b at the preceding switching valve 7a.

Further, the present disclosure is not limited to the example in Fig. 10A, and the number of the hoses 4 extending from one feeding device 100 may be three or more. The number of the fish preserves 600 connected to each hose 4 may be one or more other than two. In the former case, the switching valve 7 and the feeding hose 8 are arranged in one fish preserve 600. In the latter case, the switching valve 7 and the feeding hose 8 are arranged at least in the fish preserve 600b other than the fish preserve 600a connected to the end of the hose 4.

The hose 4 extending from one feeding device 100 may be singular. For example, in Fig. 10B, one hose 4 extends from one feeding device 100. Each hose 4 can deliver the mixed liquid F to four fish preserves 600 (600a to 600d). The switching valve 7 is disposed at an edge of the fish preserve 600 or the like. For example, the switching valves 7 include switching valves 7a to 7d. In Fig. 10B, the switching valves 7a to 7d are arranged on a float (reference numeral omitted) floating on the water surface. However, the present disclosure is not limited to this example, and at least some of the switching valves 7 may be disposed at the edge of the fish preserve 600a.

The hose 4 includes relay hoses 4a to 4d. The relay hose 4a connects (the delivery port 512 of) the feeding device 100 and the switching valve 7a, and can supply the mixed liquid F from (the delivery port 512 of) the feeding device 100 to the switching valve 7a. The relay hose 4b connects the switching valve 7a and the switching valve 7b, and can supply the mixed liquid F from the switching valve 7a to the switching valve 7b. The relay hose 4c connects the switching valve 7b and the switching valve 7c, and can supply the mixed liquid F from the switching valve 7b to the switching valve 7c. The relay hose 4d connects the switching valve 7c and the switching valve 7d, and can supply the mixed liquid F from the switching valve 7c to the switching valve 7d.

The feeding hose 8 includes feeding hoses 8a to 8d. The feeding hose 8a extends from the switching valve 7a to the float 42a of the fish preserve 600a. The tip of the feeding hose 8a is fixed to the float 42a. The feeding hose 8b extends from the switching valve 7b to the float 42b of the fish preserve 600b. The tip of the feeding hose 8b is fixed to the float 42b. The feeding hose 8c extends from the switching valve 7c to the float 42c of the fish preserve 600c. The tip of the feeding hose 8c is fixed to the float 42c. The feeding hose 8d extends from the switching valve 7d to the float 42d of the fish preserve 600d. The tip of the feeding hose 8d is fixed to the float 42d.

The switching valves 7a to 7c are, for example, three-way valves. The switching valve 7a is capable of switching interchangeably between supply and cutoff of the mixed liquid F from the relay hose 4a to the feeding hose 8a. Thus, the switching valve 7a is capable of switching between supply and cutoff of the mixed liquid F to the fish preserve 600a. Further, the switching valve 7a is capable of switching interchangeably between supply and cutoff of the mixed liquid F from the relay hose 4a to the relay hose 4b. As a result, the switching valve 7a can switch between supply and cutoff of the mixed liquid F to the switching valve 7b.

The switching valve 7b is capable of switching interchangeably between supply and cutoff of the mixed liquid F from the relay hose 4b to the feeding hose 8b. Thus, the switching valve 7b is capable of switching between supply and cutoff of the mixed liquid F to the fish preserve 600b. Further, the switching valve 7b is capable of switching interchangeably between supply and cutoff of the mixed liquid F from the relay hose 4b to the relay hose 4c. As a result, the switching valve 7b can switch between supply and cutoff of the mixed liquid F to the switching valve 7c.

The switching valve 7c is capable of switching interchangeably between supply and cutoff of the mixed liquid F from the relay hose 4c to the feeding hose 8c. Thus, the switching valve 7c is capable of switching between supply and cutoff of the mixed liquid F to the fish preserve 600c. Further, the switching valve 7c is capable of switching interchangeably between supply and cutoff of the mixed liquid F from the relay hose 4c to the relay hose 4d. As a result, the switching valve 7c can switch between supply and cutoff of the mixed liquid F to the switching valve 7d.

The switching valve 7d is capable of switching interchangeably between supply and cutoff of the mixed liquid F from the relay hose 4d to the feeding hose 8d. Thus, the switching valve 7d is capable of switching between supply and cutoff of the mixed liquid F to the fish preserve 600d.

The present disclosure is not limited to the example in Fig. 10B, the switching valve 7d and the feeding hose 8d may be omitted. The switching valve 7d and the feeding hose 8d are arranged in the fish preserve 600 which is connected to the end of a hose 4. For example, in Fig. 10B, the tip of the relay hose 4d (i.e., the end of the hose 4) may be fixed to the float 42d of the fish preserve 600d located at the end. **In** this case, supply and cutoff of the mixed liquid F to the fish preserve 600d at the end are achieved by switching between supply and cutoff of the mixed liquid F from the relay hose 4c to the relay hose 4d at the preceding switching valve 7c.

The number of fish preserves 600 connected to the hose 4 is not limited to the example in Fig. 10B, and may be a plural number other than four. In this case, the switching valve 7 and the feeding hose 8 are arranged at least in the fish preserves 600a to 600c other than the fish preserve 600d connected to the end of the hose 4.

According to the feeding system 500 of the fifth embodiment, the sum of the lengths of the hose 4 extending from the feeding device 100 and the feeding hoses 8 connected thereto can be further shortened. For example, the sum of the hose lengths in Figs. 10A and 10B is shorter than the hose lengths in Fig. 2 (the sum of the lengths of the four hoses 4). In addition, by reducing the sum of the hose lengths, the amount of substances adhering to the outer surfaces of the hoses 4 and the feeding hoses 8 can be further reduced. Therefore, the frequency of maintenance required for the hoses 4 and the feeding hoses 8 can be reduced.

### 5. Remarks

Embodiments of the present invention have been described above. It should be understood by those skilled in the art that the above-described embodiment is merely an example and various modifications can be made to a combination of components and processes thereof and are within the scope of the present invention.

### 6. Overview

The above-described embodiment will be collectively described below.

For example, the feeding device 100 disclosed herein is
a feeding device 100 for supplying feeds to fish in a fish preserve 600, including:
a storage unit 1 for storing the feeds E;
a pump device 3 for supplying water W; and
a mixing unit 2, 6 for mixing the feeds E supplied from the storage unit 1 with the water W, wherein
the pump device 3 conveys a mixed liquid F of the feeds E and the water W under pressure to hoses 4 for feeding (first configuration).

The feeding device 100 according to the first configuration, wherein
the mixing unit 2 has a mixing tank 21 for the feeds E and the water W;
the pump device 3 includes:
   a lifting pump 31 for supplying the water W to the mixing tank 21; and
   a pressure pump 32 for conveying the mixed liquid F discharged from the mixing tank 21 under pressure to the hoses 4 for feeding (second configuration).

Further, the feeding device 100 according to the first configuration, wherein
the mixing unit 2 has a mixing tank 21 for the feeds E and the water W;
the pump device 3 supplies a portion of the water W to the mixing tank 21 and conveys the mixed liquid F discharged from the mixing tank 21 together with another portion of the water W under pressure to the hoses 4 for feeding (third configuration).

Further, in the feeding device 100 according to the first configuration,
the mixing unit 6 includes:
a rotor 61 rotatable about a rotation axis J;
a case 62 for surrounding and accommodating the rotor 61; and
a motor 63 for rotating the rotor 61, wherein
the rotor 61 forms, between the rotor 61 and the case 62, a plurality of distribution compartments 64 that are spaces independent of each other and arranged in a circumferential direction around the rotation axis J,
the case 62 includes:
   a supply port 601 for connecting the storage unit 1 and some of the distribution compartments 64;
   a water inlet port 602 for connecting the others of the distribution compartments 64 and a pipe 3341 on a pressure side of the pump device 3; and
   a discharge port 603 for connecting the others of the distribution compartments 64 and the pipe 3342 on a side of the hoses 4 (fourth configuration).

The feeding device 100 according to any one of the first to fourth configurations is
a feeding device 100 for supplying feeds to fish in the plurality of fish preserves 600, further including:
a distribution unit 5 for distributing the mixed liquid F conveyed from the pump device 3 under pressure to at least one of the hoses 4, wherein
the distribution unit 5 includes:
   an inflow port 511 into which the mixed liquid F conveyed under pressure from the pump device 3 flows;
   a plurality of delivery ports 512 for delivering the mixed liquid F;
   a switching unit 52 that is disposed at each of the delivery ports 512 and switches between delivery and blocking of the mixed liquid F; wherein
   each of the delivery ports 512 is connected to the respective hose 4 via the switching unit 52 (fifth configuration).

Further, in the feeding device 100 according to the fifth configuration,
at least a portion of the distribution unit 5 may be disposed below a discharge port 22, 602 for discharging the mixed liquid F of the mixing unit 2, 6 (sixth configuration).

Further, the feeding system 500 disclosed herein comprising:
the feeding device 100 according to any one of the first to sixth configurations;
the hoses 4 for discharging the mixed liquid F supplied from the feeding device 100 to the fish preserve 600 (seventh configuration).

Further, the feeding system 500 according to the seventh configuration is
a feeding system 500 for supplying feeds E to the fish in the fish preserve 600 partitioned so as to allow water to flow between the inside and the outside, further including:
a floating platform 200 that floats on a water surface with the feeding device 100 placed thereon (eighth configuration).

Further, in the feeding system 500 according to the seventh or eighth configuration,
the feeding port 40 for discharging the mixed liquid F in at least a portion of the hose 4 for feeding may be disposed below a water surface of the fish preserve 600 (ninth configuration).

Further, in the feeding system 500 according to any one of the seventh to ninth configurations,
the feeding port 40 for discharging the mixed liquid F in the hoses 4 may be connected to the fish preserve 700 submerged in water (tenth configuration).

Further, the feeding system 500 according to any one of the seventh to tenth configurations, including:
a first communication unit 303 disposed on a side of the feeding device 100;
a first control unit 302 that is disposed on the side of the feeding device 100 and controls the feeding device 100 and the first communication unit 303;
a second communication unit 404 capable of communicating with the first communication unit 303;
a second control unit 403 that controls the first control unit 302 and the second communication unit 404; and
an input unit 405 that receives an operation input and outputs an output signal based on the operation input to the second control unit 403 (eleventh configuration).

### REFERENCE SIGNS LIST

100 feeding device
1 silo (storage unit)
11 storage tank
12 supply member
2 mixing unit
21 mixing tank
22 discharge port
3 pump device
31 lifting pump
32 pressure pump
33 pipe
331 intake pipe
332 lifting pipe
333 inflow pipe
334 pressure pipe
3341 upstream pipe
3342 downstream pipe
335 branch pipe
34,35 pump
4 hose
4a to 4d relay hose
40 feeding port
41 transfer hose
42, 42a to 42d float
43 feeding pipe
44 air vent valve
5 distribution unit
51 distribution pipe
511 inflow port
512 delivery port
52 switching unit
6 mixing unit
601 supply port
602 water inlet port
603 discharge port
61 rotor
611 rotor shaft
612 cylindrical portion
613 blade
62 case
621 first cylindrical portion
622 side cover
6221 water drain hole
623 second cylindrical portion
63 motor
631 rotor shaft
64 distribution compartment
7, 7a to 7d switching valve
8, 8a to 8d feeding hose
200 floating platform
300 connected device
301 memory
302 (first) control unit
303 (first) communication unit
400 base station
401 information and communication device
402 memory
403 (second) control unit
404 (second) communication unit
405 input unit
500 feeding system
501 (various) sensors
600 fish preserve
700 submersible fish preserve
E feed
W water
F mixed liquid
B site

## Claims

1. A feeding device for supplying feeds to fish in a fish preserve, comprising:
a storage unit storing the feeds;
a pump device supplying water; and
a mixing unit mixing the feeds supplied from the storage unit with the water, wherein
the pump device conveys a mixed liquid of the feeds and the water under pressure to hoses for feeding.

2. The feeding device according to claim 1, wherein
the mixing unit has a mixing tank for the feeds and the water, and
the pump device includes:
a lifting pump supplying the water to the mixing tank; and
a pressure pump conveying the mixed liquid discharged from the mixing tank under pressure to the hoses for feeding.

3. The feeding device according to claim 1, wherein
the mixing unit has a mixing tank for the feeds and the water, and
the pump device supplies a portion of the water to the mixing tank and conveys the mixed liquid discharged from the mixing tank together with another portion of the water under pressure to the hoses for feeding.

4. The feeding device according to claim 1, wherein
the mixing unit includes:
a rotor rotatable about a rotation axis;
a case surrounding and accommodating the rotor; and
a motor rotating the rotor,
the rotor forms, between the rotor and the case, a plurality of distribution compartments that are spaces independent of each other and arranged in a circumferential direction around the rotation axis, and
the case includes:
a supply port connecting the storage unit and some of the distribution compartments;
a water inlet port connecting others of the distribution compartments and a pipe on a pressure side of the pump device; and
a discharge port connecting the others of the distribution compartments and the pipe on a side of the hoses.

5. The feeding device according to claim 1, for supplying feeds to fish in the plurality of fish preserves, further comprising:
a distribution unit distributing the mixed liquid conveyed from the pump device under pressure to at least one of the hoses, wherein
the distribution unit includes:
an inflow port into which the mixed liquid conveyed under pressure from the pump device flows;
a plurality of delivery ports delivering the mixed liquid; and
a switching unit that is disposed at each of the delivery ports and switches between delivery and blocking of the mixed liquid, and
each of the delivery ports is connected to the respective hose via the switching unit.

6. The feeding device according to claim 5, wherein
at least a portion of the distribution unit is disposed below a discharge port discharging the mixed liquid of the mixing unit.

7. The feeding system comprising: the feeding device according to any one of claims 1 to 6, and the hoses discharging the mixed liquid supplied from the feeding device to the fish preserve.

8. The feeding system according to claim 7, for supplying feeds to the fish in the fish preserve partitioned so as to allow water to flow between the inside and the outside, further comprising:
a floating platform that floats on a water surface with the feeding device placed thereon.

9. The feeding system according to claim 7, wherein
a feeding port discharging the mixed liquid in at least a portion of the hose for feeding is disposed below a water surface of the fish preserve.

10. The feeding system according to claim 7, wherein
a feeding port discharging the mixed liquid in the hoses is connected to the fish preserve submerged in water.

11. The feeding system according to claim 7, comprising:
a first communication unit disposed on a side of the feeding device;
a first control unit that is disposed on the side of the feeding device and controls the feeding device and the first communication unit;
a second communication unit capable of communicating with the first communication unit;
a second control unit that controls the first control unit and the second communication unit; and
an input unit that receives an operation input and outputs, to the second control unit, an output signal based on the operation input.
